# EUROPÄISCHE PATENTSCHRIFT

(11) **EP 2 785 479 B1**
(45) Veröffentlichungstag und Bekanntmachung des Hinweises auf die Patenterteilung: **02.03.2016**
(21) Anmeldenummer: 12812881.6
(22) Anmeldetag: 04.12.2012
(51) Int. Cl.: B21K 1/56, C21D 9/00, F16B 25/00, F16B 33/00

(54) **KORROSIONSBESTÄNDIGE SCHRAUBE, VERWENDUNG EINER DERARTIGEN SCHRAUBE IN EINER KORROSIVEN UMGEBUNG UND VERFAHREN ZUR HERSTELLUNG EINER SOLCHEN SCHRAUBE**
CORROSION RESISTANT SCREW, USE OF SUCH A SCREW IN A CORROSIVE ENVIRONMENT AND METHOD OF MANUFACTURING SUCH A SCREW
VIS RESISTANT A CORROSION, UTILISATION D'UN TEL VIS DANS UN ENVIRONNEMENT CORROSIF ET PROCEDE DE FABRICATION D'UNE TELLE VIS

(30) Priorität: 04.12.2011 DE 102011087683
(43) Veröffentlichungstag der Anmeldung: 08.10.2014
(73) Patentinhaber: Baier & Michels GmbH und Co. KG, 64372 Ober-Ramstadt (DE)
(72) Erfinder: AMBROS, Olaf, 68647 Biblis (DE)
(74) Vertreter: Sommer, Peter
(86) Internationale Anmeldenummer: PCT/EP2012/074311
(87) Internationale Veröffentlichungsnummer: WO 2013/083540

(56) Entgegenhaltungen:
- EP-A1- 0 589 399
- EP-A1- 1 020 536
- DE-C1- 3 926 000
- US-A- 5 186 688
- US-A1- 2001 014 262
- US-A1- 2009 183 546

## Beschreibung

### Technisches Gebiet

Die Erfindung betrifft eine Schraube, aufweisend einen mit einem Gewinde versehenen Schaft, hergestellt aus einem sich für eine festigkeitssteigernde Wärmebehandlung eignenden Material, das gegenüber Korrosion beständig ist sowie die Verwendung einer derartigen Schraube in einer korrosiven Umgebung in Verbindung mit einem korrosionsbeständigen zu verschraubenden Bauteil und weiterhin ein Verfahren zur Herstellung einer solchen Schraube.

Derartige Schrauben werden insbesondere für die sogenannte Direktverschraubung verwendet, bei der die Schraube sich selbst ein Gewinde in ein Mutternbauteil formt, das zur Aufnahme der Schraube in der Regel ein entsprechendes Durchgangsloch oder Sackloch aufweist.

### Stand der Technik

Aus dem Stand der Technik ist bekannt, in korrosiver Umgebung Schrauben aus einem korrosionsbeständigen Werkstoff wie Edelstahl einzusetzen, so etwa DE 297 06 372 U1. Die Festigkeit derartiger Schrauben ist aber nicht für alle Anwendungsfälle ausreichend, beispielsweise ist bei einer Direktverschraubung in Kunststoffteile oder in Kohlefaserverbundwerkstoffe eine höhere Festigkeit erforderlich.

Aus der EP 0 948 719 B1 ist eine in Kunststoff einzudrehende Schraube bekannt, die aufgrund ihrer Geometrie aus einem Material bestehen kann, das gegenüber herkömmlichen Materialien für Schrauben zum Eindrehen in Kunststoff eine geringere Festigkeit aufweist.

Aus der DE 198 15 670 A1 ist eine korrosionsbeständige gewindefurchende Schraube mit partiellen Aushärtungsbereichen mit verringerter Korrosionsbeständigkeit bekannt, die nur einen kleinen Teil der Schraube ausmachen, der zum Bohren eines Loches und zum Formen eines Gewindes benötigt wird, wohingegen im tragenden Bereich der Schraube keine Aushärtung erfolgt.

Grundsätzlich würden sich auch Schrauben aus Titan eignen, der Preis ist jedoch für Verschraubungen im Bereich der Großserienproduktion zu hoch.

In der Norm DIN EN 10269 "Stähle und Nickellegierungen für Befestigungselemente für den Einsatz bei erhöhten und/oder tiefen Temperaturen" werden Anforderungen an Werkstoffe für Befestigungselemente aus unlegierten und legierten (einschließlich nichtrostenden) Stählen und Nickellegierungen festgelegt. Schrauben aus diesen Werkstoffen eignen sich für eine festigkeitssteigernde Wärmebehandlung, das gegenüber Korrosion beständig ist.

### Offenbarung der Erfindung

Ein erster Gegenstand der Erfindung ist eine Schraube, aufweisend einen mit einem Gewinde versehenen Schaft, bestehend aus einem sich für eine festigkeitssteigernde Wärmebehandlung eignenden Werkstoff, der gegenüber Korrosion beständig ist. Die Schraube weist eine vor der Formgebung des Gewindes durch Umformen vorgegebene erste Festigkeit auf, die durch die Wärmebehandlung hervorgerufen ist. Zur Herstellung des Gewindes ist der Schaft mit Gewindegängen, Gewindeflanken und einem Gewindegrund verformt und sind die Gewindegänge durch die dadurch aufgetretene Kaltverfestigung in der Festigkeit gegenüber dem nicht umgeformten Bereich erhöht und weisen eine zweite Festigkeit auf. Darüber hinaus ist das Gewinde gewindeformend oder gewindefurchend ausgebildet.

Eine derartige Schraube weist einerseits eine ausreichende Festigkeit und andererseits eine ausreichende Korrosionsbeständigkeit auf.

Vorteilhafterweise kann der Werkstoff der Schraube insbesondere gegen Kontaktkorrosion mit Kohlenstoff oder kohlenstoffverstärkten Verbundmaterialien beständig sein. Da Kohlenstoff aufgrund seines elektrochemischen Potentials ungünstig zu Eisen liegt, ist es für die dauerhafte Anwendung der Schraube besonders wichtig, dass diese Art der Korrosion vermieden wird, unabhängig davon, ob die Umgebung darüber hinaus noch korrosiv ist oder nicht.

Vorteilhafterweise kann die Schraube aus einem hochwarmfesten Werkstoff entsprechend EN 10269 oder ähnliche, insbesondere aus einem austenitischen Werkstoff oder aus einer Nickel-Basislegierung bestehen.

Eine besondere Ausführungsform betrifft eine Schraube, bei der die Gewindesteigung (P) bezogen auf den Außendurchmesser (Da) ein Verhältnis Q1 = P/Da von 0,3 bis 0,385 aufweist, wobei jeder Gewindegang im Gewindegrund zwischen den Gewindeflanken einen Radius Rg aufweist und wobei der Radius Rg bezogen auf die Steigung ein Verhältnis Q2 = Rg/P von 0,5 bis 1,0, vorzugsweise 0,6 bis 0,8 aufweist. Es hat sich herausgestellt, dass eine derartige Schraube für die Verschraubung in Kunststoffbauteilen geeignet ist, insbesondere für Thermoplaste oder Duroplaste mit hohem Faseranteil.

Vorteilhafterweise kann der Übergang von dem den Radius Rg aufweisenden Gewindegrund in die Gewindeflanke in einem Winkelbereich von 25° bis 45°, insbesondere von 28° bis 38° liegen und kann der Flankenwinkel in einem Winkelbereich von 20° bis 30° liegen. Es hat sich gezeigt, dass bei diesen Winkeln eine ausreichende Stabilität der Gewindeflanken beim Eindringen in das Mutternbauteil vorliegt.

Vorteilhafterweise kann der Schaft durch Umformung entstandene Gewindespitzen und einen nicht umgeformten Bereich im Gewindekern aufweisen und können die Gewindespitzen mit höherer, zweiter Festigkeit als der nicht umgeformte Bereich mit der ersten Festigkeit ausgebildet sein, wobei die durch die Umformung erzielte zweite Festigkeit der Gewindespitzen um mindestens 10%, vorzugsweise um 30% und höchstens um 55% höher als die erste Festigkeit ist.

Vorteilhafterweise kann die Schraube ein metrisches, gewindeformendes Gewinde aufweisen und aus einem Werkstoff bestehen, der gegenüber Kontaktkorrosion mit rostfreiem Edelstahl beständig ist.

Ein weiterer Gegenstand der Erfindung ist die Verwendung der erfindungsgemäßen Schraube in einer korrosiven Umgebung in Verbindung mit einem gegenüber dieser Umgebung korrosionsbeständigen zu verschraubenden Bauteil.

Noch ein weiterer Gegenstand der Erfindung ist Verfahren zur Herstellung einer Schraube nach einem der vorhergehenden Ansprüche, bestehend aus einem sich für eine festigkeitssteigernde Wärmebehandlung eignenden Werkstoff, wobei ausgehend von einem wärmebehandelten Rohling zur Erhöhung der Festigkeit die Verformung des Rohlings zur Herstellung der Schraubengeometrie nach der Wärmebehandlung des Rohlings erfolgt. Eine weitere, die Festigkeit maßgeblich verändernde Behandlung ist nicht vorgesehen.

Vorteilhafterweise kann zur Entfernung von etwa aus der Umformung zur durch Wärmebehandlung verfestigten Schraube stammenden nicht korrosionsbeständigen Partikeln ein Beizen erfolgen. Derartige Partikel können beispielsweise von den Walzbacken an die Schraube übertragen werden. Mit dem Beizen, bei dem eine dünne metallische Schicht entfernt wird, wird Fremdeisenkorrosion vermieden.

Vorteilhafterweise kann zur Ausbildung einer passiven Schutzschicht an der Oberfläche eine sogenannte Passivierung der Oberfläche erfolgen. Bei der Passivierungsbehandlung wird kein Material abgetragen, sondern die Beschaffenheit und die Dicke der Passivschicht wird gezielt optimiert.

Noch ein weiterer Gegenstand der Erfindung ist eine Baugruppe aus mehreren Bauteilen mit mindestens zwei Bauteilen aus unterschiedlichen Werkstoffen, wobei die Bauteile mit einem von jeweiligen Werkstoff abhängigen Lochdurchmesser zur Aufnahme der Schraube zur Bereitstellung der Schraubverbindung vorgesehen ist. Der Werkstoff des einen Bauteils ist ein Kohlefaserverbundwerkstoff und der Werkstoff des anderen Bauteils ist NE-Metallguss, insbesondere mit harter Gusshaut, ein Verbundwerkstoff wie Faserverbundwerkstoffe, Kompaktverbundwerkstoffe wie Glaskugelverbundwerkstoffe und deren Mischformen, wobei die mindestens zwei Bauteile aus unterschiedlichem Werkstoff mit jeweils einer oder mehreren gleichen erfindungsgemäßen Schrauben zu einer Baugruppe verbunden sind.

Bislang wurden derartige Baugruppen in der Großserienfertigung unter anderem auch wegen der fehlenden kostengünstigen Schrauben nicht hergestellt.

### Kurze Beschreibung der Zeichnungen

Das erfindungsgemäße Verfahren wird anhand der Zeichnung erläutert. Es zeigen:
- Fig. 1: eine erfindungsgemäße Schraube für die Verschraubung in Kunststoff in einer Seitenansicht;
- Fig. 2: die Ausformung des Gewindes der Schraube aus Fig. 1 im Detail;
- Fig. 3: eine erfindungsgemäße Schraube mit metrischem, gewindefurchendem Gewinde in einer Seitenansicht;
- Fig. 4: eine Baugruppe aus mehreren Bauteilen aus unterschiedlichen Werkstoffen verbunden mit einer erfindungsgemäßen Schraube.

### Ausführungsform(en) der Erfindung

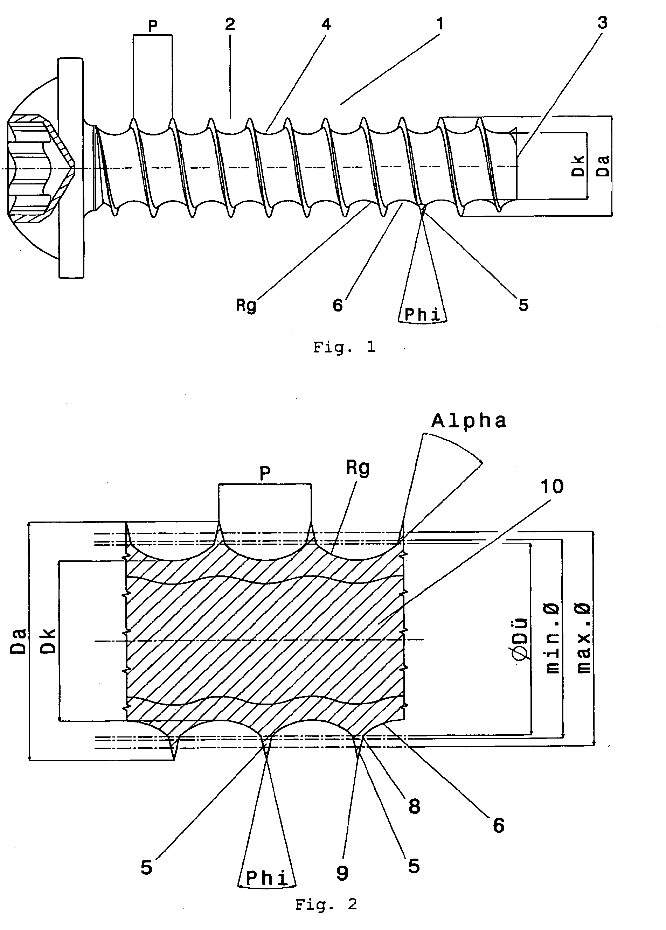

Die in Fig. 1 in einer Seitenansicht dargestellte erfindungsgemäße Schraube 1 für die Verschraubung in Kunststoff weist einen mit einem Gewinde 2 versehenen Schaft 3 mit einem Außendurchmesser Da und einem Kerndurchmesser Dk auf, wobei der Schaft 3 aus einem sich für eine festigkeitssteigernde Wärmebehandlung eignenden Werkstoff besteht, das gegenüber Korrosion beständig ist. Ebenfalls dargestellt, aber für diese Erfindung nicht relevant, ist ein Kopf der Schraube mit innenliegenden Kraftangriffsflächen.

Die Schraube weist eine durch eine vor der Formgebung des Gewindes 2 durch Umformen erfolgte Wärmebehandlung vorgegebene erste Festigkeit auf und der Schaft 3 wurde zur Herstellung des Gewindes 2 mit Gewindegängen 4, Gewindeflanken 5 mit einem Flankenwinkel phi und einem Gewindegrund 6 zusätzlich verformt.

Die Gewindegänge 4 und insbesondere die Gewindeflanken 5 sind durch die während der Verformung aufgetretene Kaltverfestigung in der Festigkeit gegenüber dem nicht umgeformten Bereich 7 der Schraube 1, also etwa im Inneren des Schafts 3, erhöht, wobei das Gewinde 2 gewindeformend oder gewindefurchend ausgebildet ist.

Fig. 2 zeigt die Ausformung des Gewindes der Schraube aus Fig. 1 im Detail. Die Gewindesteigung P bezogen auf den Außendurchmesser Da weist bei einer solchen Schraube ein Verhältnis Q1 = P/Da von 0,3 bis 0,385 auf, im dargestellten Fall beträgt das Verhältnis 0,37. Jeder Gewindegang 4 weist im Gewindegrund 6 zwischen den Gewindeflanken 5 einen Radius Rg auf, wobei der Radius Rg bezogen auf die Steigung P ein Verhältnis Q2 = Rg/P von 0,5 bis 1,0, vorzugsweise 0,55 bis 0,8 aufweist, im dargestellten Fall 0,62.

Der Flankenwinkel phi der Gewindeflanke 5 kann in einem Winkelbereich von 20° bis 30° liegen, wobei im dargestellten Fall der Winkel phi 25° beträgt.

In der Detaildarstellung ist weiterhin zu erkennen, dass der Übergang an einer Übergangsstelle 8 mit einem Durchmesser Dü von dem Gewindegrund 6 mit dem Radius Rg in die Gewindeflanke 5 ein Winkel alpha aufweist, der in einen Winkelbereich von 25° bis 45°, insbesondere von 28° bis 38° liegt und im vorliegenden Fall ca. 32° beträgt.

Die beiden anderen Durchmesser min. und max. sind für Beschreibung der vorliegenden Erfindung nicht von Bedeutung.

Der vor der Umformung zur Ausbildung des Gewindes 2 mit Gewindespitzen 9 bereits eine erste Festigkeit aufweisende Schaft 3 weist einen nicht umgeformten Kernbereich 10 auf, sodass die Gewindespitzen 9 mit höherer Festigkeit als der nicht umgeformte Kernbereich 10 ausgebildet sind, wobei die durch die Umformung erzielte Festigkeit um mindestens 10%, vorzugsweise um 30% und höchstens um 55% höher ist.

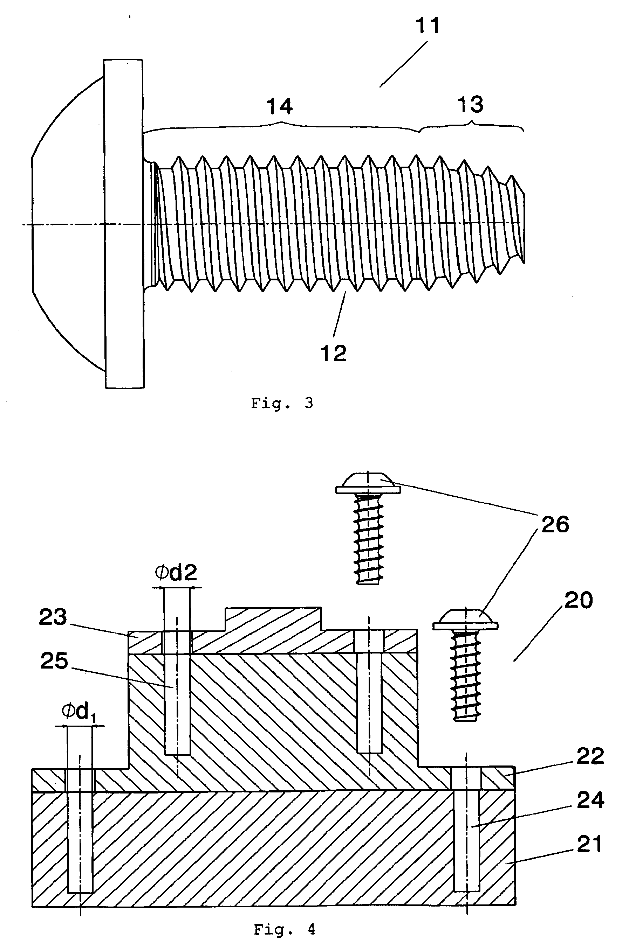

Fig. 3 zeigt eine weitere erfindungsgemäße Schraube 11 mit metrischem, gewindeformenden Gewinde 12 in einer Seitenansicht. Das Gewinde 12 weist einen sich von der Spitze weg im Durchmesser vergrößernden formgebenden Bereich 13 auf, der in den tragenden Gewindebereich 14 übergeht. In beiden Breichen 13, 14 sind die Gewindegänge voll ausgebildet, sodass sich der Kerndurchmesser von der Spitze zum tragenden Bereich 14 hin vergrößert.

Die Schrauben 1, 11 können in einer korrosiven Umgebung in Verbindung mit einem gegenüber dieser Umgebung korrosionsbeständigen zu verschraubenden Bauteil eingesetzt werden.

In Fig. 4 ist eine Baugruppe 20 aus mehreren Bauteilen 21, 22, 23 aus unterschiedlichen Werkstoffen schematisch dargestellte, wobei die Bauteile 21, 22 jeweils mindestens ein Loch, hier als Sackloch 24, 25 mit einem vom jeweiligen Werkstoff abhängigen Lochdurchmesser d1, d2 zur Aufnahme der Schraube 26 zur Bereitstellung der Schraubverbindung aufweisen. Das Bauteile 21 kann aus dem Werkstoff Kohlefaserverbundwerkstoff sein, das Bauteil 22 kann aus dem Werkstoff NE-Metallguss, insbesondere mit harter Gusshaut, oder Verbundwerkstoffe wie Faserverbundwerkstoffe, Kompaktverbundwerkstoffe wie Glaskugelverbundwerkstoffe und deren Mischformen sein. Die Bauteile 21 - 23 sind mit jeweils einer oder mehreren gleichen Schrauben 26 zu der einzigen Baugruppe 20 verbunden.

Bei der Herstellung des Gewindes durch Umformung ist darauf zu achten, dass die Temperatur während der gesamten Umformung unter der Temperatur zur Aufhebung der durch die Wärmebehandlung hervorgerufenen Festigkeit liegt. Dies kann dadurch erfolgen, dass die Herstellung der Schraubengeometrie durch Walzen mit ausreichend großer Umformlänge des Walzwerkzeugs erfolgt.

Für die Anwendung der Schraube geeignete Werkstoffe können unter anderem sein: AL-Druckguss, AlMg-Druckguss, Mg-Druckguss, kohlenstofffaser- oder glasfaserverstärkte Kunststoffe, beispielsweise ungesättigtes Polyester.

Die Schraube kann aus einer austenitischen korrosionsbeständigen Stahllegierung mit hoher Festigkeit bestehen und eignet sich für die Anwendung in gegossenen oder gebohrten Kernlöchern, ohne dass eine Kontaktkorrosion mit dem Werkstoff vorhanden, ist, in den die Schraube eingeschraubt wird.

## Patentansprüche

1. Schraube (1), aufweisend einen mit einem Gewinde (2) versehenen Schaft (3), bestehend aus einem sich für eine festigkeitssteigernde Wärmebehandlung eignenden Werkstoff, der gegenüber Korrosion beständig ist, **dadurch gekennzeichnet, dass** die Schraube eine vor der Formgebung des Gewindes durch Umformen vorgegebene erste Festigkeit aufweist, die durch die Wärmebehandlung hervorgerufen ist, dass der Schaft zur Herstellung des Gewindes mit Gewindegängen (4), Gewindeflanken (5) und einem Gewindegrund (6) verformt und die Gewindegänge durch die dadurch aufgetretene Kaltverfestigung in der Festigkeit gegenüber dem nicht umgeformten Bereich erhöht sind und eine zweite Festigkeit aufweisen, wobei das Gewinde gewindeformend oder gewindefurchend ausgebildet ist.

2. Schraube (1) nach Anspruch 1, **dadurch gekennzeichnet, dass** der Werkstoff gegen Kontaktkorrosion mit Kohlenstoff oder kohlenstoffverstärkten Verbundmaterialien beständig ist.

3. Schraube (1) nach Anspruch 1 oder 2, **dadurch gekennzeichnet, dass** die Schraube aus einem hochwarmfesten Werkstoff entsprechend EN 10269 oder ähnliche, insbesondere aus einem austenitischen Werkstoff oder aus einer Nickel-Basislegierung besteht.

4. Schraube (1) nach einem der Ansprüche 1 bis 3, **dadurch gekennzeichnet, dass** die Gewindesteigung (P) bezogen auf den Außendurchmesser (Da) ein Verhältnis Q1 = P/Da von 0,3 bis 0,385 aufweist, wobei jeder Gewindegang im Gewindegrund zwischen den Gewindeflanken einen Radius Rg aufweist und wobei der Radius Rg bezogen auf die Steigung ein Verhältnis Q2 = Rg/P von 0,5 bis 1,0, vorzugsweise 0,55 bis 0,8 aufweist.

5. Schraube (1) nach Anspruch 4, **dadurch gekennzeichnet, dass** der Übergang von dem Gewindegrund (6) in die Gewindeflanke (5) in einem Winkelbereich von 25° bis 45°, insbesondere von 28° bis 38° liegt und dass der Flankenwinkel in einem Winkelbereich von 20° bis 30° liegt.

6. Schraube (1) nach einem der Ansprüche 1 bis 5, **dadurch gekennzeichnet, dass** der Schaft (3) durch Umformung entstandene Gewindespitzen (9) und einen nicht umgeformten Bereich (10) im Gewindekern aufweist und dass die Gewindespitzen mit höherer, zweiter Festigkeit als der nicht umgeformte Bereich mit der ersten Festigkeit ausgebildet ist, wobei die durch die Umformung erzielte zweite Festigkeit um mindestens 10%, vorzugsweise um 30% und höchstens um 55% höher ist.

7. Schraube (1) nach einem der Ansprüche 1 oder 6, **dadurch gekennzeichnet, dass** Schraube ein metrisches, gewindeformendes Gewinde (2) aufweist und aus einem Werkstoff besteht, der gegenüber Kontaktkorrosion mit rostfreiem Edelstahl beständig ist.

8. Verwendung der Schraube (1) nach einem der Ansprüche 1 bis 7 in einer korrosiven Umgebung in Verbindung mit einem gegenüber dieser Umgebung korrosionsbeständigen zu verschraubenden Bauteil.

9. Verfahren zur Herstellung einer Schraube (1) nach einem der vorhergehenden Ansprüche, bestehend aus einem sich für eine festigkeitssteigernde Wärmebehandlung eignenden Werkstoff, **dadurch gekennzeichnet, dass** ausgehend von einem wärmebehandelten Rohling zur Erhöhung der Festigkeit die Verformung des Rohlings zur Herstellung der Schraubengeometrie nach der Wärmebehandlung des Rohlings erfolgt.

10. Verfahren nach Anspruch 9, **dadurch gekennzeichnet, dass** zur Entfernung von etwa aus der Umformung zur durch Wärmebehandlung verfestigten Schraube (1) stammenden nicht korrosionsbeständigen Partikeln ein Beizen erfolgt.

11. Verfahren nach Anspruch 9 oder 10, **dadurch gekennzeichnet, dass** zur Ausbildung einer passiven Schutzschicht an der Oberfläche eine sogenannte Passivierung der Oberfläche erfolgt.

12. Baugruppe (20) aus mehreren Bauteilen (23) mit mindestens zwei Bauteilen aus unterschiedlichen Werkstoffen, wobei die Bauteile einen vom jeweiligen Werkstoff abhängigen Lochdurchmesser zur Aufnahme der Schraube zur Bereitstellung der Schraubverbindung aufweisen, **dadurch gekennzeichnet, dass** der Werkstoff des einen Bauteils ein Kohlefaserverbundwerkstoff ist und dass der Werkstoff des anderen Bauteils NE-Metallguss, insbesondere mit harter Gusshaut, oder Verbundwerkstoffe wie Faserverbundwerkstoffe, Kompaktverbundwerkstoffe wie Glaskugelverbundwerkstoffe und deren Mischformen ist, wobei die Bauteile mit jeweils einer oder mehreren gleichen Schrauben nach einem der Ansprüche 1 bis 7 zu einer Baugruppe verbunden sind.

## Claims

1. A screw (1), comprising a thread (2) provided with a shank (3) and consisting of a material that is suitable for a strength-increasing thermal treatment and that is resistant to corrosion, **characterized in that** said screw has a first strength predetermined by thermal treatment carried out prior to creation of said thread by reshaping, that said shaft is reshaped in order to produce said shank with its turns (4), flanks (5), and thread root (6), and the thread turns have, on account of the strain hardening caused by reshaping, an increased strength as compared with that of the non-reshaped region, and have a second strength, the thread being thread-forming or selftapping.

2. The screw (1) as defined in claim 1, **characterized in that** the material is resistant to galvanic corrosion in contact with carbon or carbon fiber reinforced composite materials.

3. The screw (1) as defined in claim 1 or claim 2, **characterized in that** said screw is made of a hightemperature material in accordance with EN 10269 or similar, more particularly of an austenitic material or a nickel-base alloy.

4. The screw (1) as defined in any one of claims 1 to 3, **characterized in that** the pitch (P), based on the external diameter (Da) shows a ratio Q1 = P/Da of from 0.3 to 0.385 where each turn of thread in the thread root between the thread flanks has a radius Rg and the radius (Rg) based on the pitch shows a ratio Q2 = Rg/P of from 0.5 to 1.0, preferably from 0.6 to 0.8.

5. The screw (1) as defined in claim 4, **characterized in that** the transition of said thread root (6) to said thread flank (5) ranges from 25 ° to 45 °, more particularly from 28 ° to 38 ° and that said flank angle lies in an angular range of 20 ° to 30 °.

6. The screw (1) as defined in any one of claims 1 to 5, **characterized in that** said shank (3) comprises thread tips (9) formed by reshaping and a non-reshaped region (10) in the thread core, and the thread tips can be formed with a second strength that is higher than that of the non-reshaped region showing the first strength, the second strength of the thread tips achieved by reshaping being greater than the first strength by at least 10 %, preferably by 30 % and at most by 55 %

7. The screw (1) as defined in claim 1 or claim 6, **characterized in that** said screw comprises a metric, thread-forming thread (2) and consists of a material that is resistant to galvanic corrosion in contact with stainless steel.

8. The use of the screw (1) as defined in any one of claims 1 to 7 in a corrosive environment in conjunction with a component to be screwed that is not corroded by this environment.

9. A method for the fabrication of a screw (1) as defined in any one of the previous claims, consisting of a material suitable for a strength-increasing thermal treatment, **characterized in that** starting from a blank heat-treated for enhancing the strength thereof, reshaping of said blank for the production of the screw (1) geometry takes place after said heat treatment of said blank.

10. The method as defined in claim 9, **characterized in that** pickling is carried out for the purpose of removing any non-corroding-resistant particles possibly resulting from reshaping to form said screw (1) consolidated by thermal treatment.

11. The method as defined in claim 9 or claim 10, **characterized in that** so-called passivation of the surface is carried out for the purpose of forming a passive protective coating on the surface.

12. A construction unit (20) consisting of a plurality of components (23) including at least two components of different materials, wherein said components comprise a hole diameter, dependent on the respective material, for the purpose of accommodating said screw to form the screwed joint, **characterized in that** the material of one of the components is a carbon fiber composite material and that the material of the other component is a non-ferrous casting, more particularly one having a hard casting skin, or is a composite material such as a fiber reinforced composite material, a compact composite material such as a glass bead composite material or hybrids thereof, wherein said components are joined together by one or more identical screws as defined in any one of claims 1 to 7 to form a construction unit.

## Revendications

1. Vis (1) comportant une tige (3) dotée d'un filetage (2), constituée d'une matière qui se prête à un traitement thermique augmentant la solidité qui résiste à la corrosion, **caractérisée en ce qu'**avant la conformation du filetage par façonnage, la vis fait preuve d'une première solidité prédéfinie qui est provoquée par le traitement thermique, **en ce que** pour usiner le filetage avec des pas de filet (4), des flancs de filet (5) et un fond de filet (6), la tige est déformée et par la solidification à froid qui en résulte, les pas de vis sont augmentés en solidité par rapport à la région non façonnée et font preuve d'une deuxième solidité, le filetage étant conçu par moulage de filets ou par laminage de filets.

2. Vis (1) selon la revendication 1, **caractérisée en ce que** la matière est rendue résistante à la corrosion de contact par carbone ou par matériaux composites renforcés au carbone.

3. Vis (1) selon la revendication 1 ou 2, **caractérisée en ce que** la vis est constituée d'une matière résistant à de hautes températures selon EN 10269 ou analogue, notamment en une matière austénitique ou en un alliage sur base de nickel.

4. Vis (1) selon l'une quelconque des revendications 1 à 3, **caractérisée en ce qu'**en rapport au diamètre extérieur (Da), le pas de vis (P) présente un rapport Q1 = P/Da de 0,3 à 0,385, dans le fond de filet entre les flancs de filet, chaque pas de filet présentant un rayon Rg et en rapport au pas, le rayon présentant un rapport Q2 = Rg/P de 0,5 à 1,0, de préférence de 0,55 à 0,8.

5. Vis (1) selon la revendication 4, **caractérisée en ce que** le passage du fond de filet (6) dans le flanc de filet (5) se situe dans un ordre angulaire de 25° à 45°, notamment de 28° à 38° et **en ce que** l'angle du flanc se situe dans un ordre angulaire de 20° à 30°.

6. Vis (1) selon l'une quelconque des revendications 1 à 5, **caractérisée en ce que** la tige (3) comporte des pointes de filet (9) obtenues par façonnage et une région non façonnée (10) dans l'âme du filetage et **en ce que** les pointes de filet sont conçues avec une deuxième solidité plus élevée que la région non façonnée avec la première solidité, la deuxième solidité obtenue par le façonnage étant plus élevée d'au moins 10 %, de préférence de 30 % et au maximum de 55 %.

7. Vis (1) selon l'une quelconque des revendications 1 ou 6, **caractérisée en ce que** la vis comporte un filetage métrique (2) auto-taraudeur et est constituée d'une matière qui est résistante à la corrosion de contact avec de l'acier inoxydable.

8. Utilisation de la vis (1) selon l'une quelconque des revendications 1 à 7 dans un environnement corrosif en association avec un élément de construction à visser, résistant à la corrosion dans ledit environnement.

9. Procédé destiné à la fabrication d'une vis (1) selon l'une quelconque des revendications précédentes, constituée d'une matière qui se prête à un traitement thermique augmentant la solidité, **caractérisé en ce que** sur la base d'une ébauche ayant subi un traitement thermique destiné à augmenter la solidité, le façonnage de l'ébauche destiné à produire la géométrie de la vis s'effectue après le traitement thermique de l'ébauche.

10. Procédé selon la revendication 9, **caractérisé en ce que** pour éliminer des particules non résistantes à la corrosion émanant éventuellement du façonnage en une vis (1) solidifiée par traitement thermique, oh procède à un décapage.

11. Procédé selon la revendication 9 ou 10, **caractérisé en ce que** pour créer une couche protectrice passive sur la surface, on effectue une dénommée passivation de la surface.

12. Ensemble (20) constitué de plusieurs éléments de construction (23) avec au moins deux éléments de construction en différentes matières, les éléments de construction présentant un diamètre de trou dépendant de la matière concernée, destiné à recevoir la vis pour procéder à l'assemblage par vissage, **caractérisé en ce que** la matière de l'un des éléments de construction est une matière composite renforcée par fibres de carbone et **en ce que** la matière de l'autre élément de construction est une fonte métallique NE, notamment avec une peau de coulée dure ou des matières composite telles que des matières composites renforcées par fibres, des matières composites compactes, telles que des matières composites renforcées par billes de verre ou leurs formes mixtes, les éléments de construction étant assemblés en un ensemble avec chaque fois une ou plusieurs vis identiques selon l'une quelconque des revendications 1 à 7.
